**Europäisches Patentamt**

**European Patent Office**

**Office européen des brevets**

(19)

(11) Veröffentlichungsnummer : **0 159 650 B2**

# (12) NEUE EUROPÄISCHE PATENTSCHRIFT

(45) Veröffentlichungstag der neuen Patentschrift :
**17.06.92 Patentblatt 92/25**

(51) Int. Cl.⁵ : **H02J 13/00,** H04L 1/20,
G01R 29/027

(21) Anmeldenummer : **85104549.2**

(22) Anmeldetag : **15.04.85**

(54) **Einrichtung zur Bewertung von Empfangssignalen in Tonfrequenz-Rundsteuerempfängern.**

(30) Priorität : **27.04.84 AT 1400/84**

(43) Veröffentlichungstag der Anmeldung :
**30.10.85 Patentblatt 85/44**

(45) Bekanntmachung des Hinweises auf die
Patenterteilung :
**09.12.87 Patentblatt 87/50**

(45) Bekanntmachung des Hinweises auf die
Entscheidung über den Einspruch :
**17.06.92 Patentblatt 92/25**

(84) Benannte Vertragsstaaten :
**AT BE CH DE FR LI NL**

(56) Entgegenhaltungen :
**EP-A- 0 030 816
AT-A- 325 706
DE-A- 2 529 761
DE-B- 2 415 368
FR-A- 1 276 826
FR-A- 2 101 286
FR-A- 2 191 375
US-A- 3 818 358**

(73) Patentinhaber : **SIEMENS
AKTIENGESELLSCHAFT
Wittelsbacherplatz 2
W-8000 München 2 (DE)**

(72) Erfinder : **Kalny, Friedrich
Jenbachgasse 46
A-1130 Wien (AT)**

EP 0 159 650 B2

Jouve, 18, rue Saint-Denis, 75001 PARIS

## Beschreibung

Die Erfindung betrifft eine Einrichtung für Tonfrequenz-Rundsteuerempfänger, zur bewertung von Empfangssignalen, die aus Impulstelegrammen bestehen, deren als Tonfrequenzsignal übertragene Einzelimpulse jeweils innerhalb eines von einem Zeitraster vorgegebenen Zeitfensters liegen, mit einem auf die Tonfrequenz abgestimmten Eingangs-bandpaß-Filter, einem nachgeschalteten Amplitudendetektor zur Feststellung von Schwellwertüberschreitungen durch die Amplitude des Ausgangssignales des Eingangs-bandpaß-Filters und mit einer an den Ausgang des Amplitudendetektors angeschlossenen Auswerteschaltung.

Eine derartige Einrichtung ist aus der FR-A-2 191 3 21913755 bekannt. Aus dieser Offenlegungsschrift ist ein Demodulator bekannt, der in Rundsteuersystemen eine der Netzspannung überlagerten Frequenz als Steuersignal erkennt.

Der Demodulator besteht aus einem für die Fernsteuerfrequenz selektiven Eingangsfilter, dem ein Amplitudendetektor nachgeschaltet ist. Das Ausgangssignal des Amplitudendetektors wird einer Auswerteschaltung zugeführt. Um am Ausgang des Demodulators ein Ausgangssignal zu erhalten, müssen drei Bedingungen erfüllt werden:

a) Das Ausgangssignal des Filters muss eine Min destamplitude erreichen.

b) Die Impulspause zwischen zwei aufeinanderfolgenden Impulsen am Ausgang des Amplitudendetektors darf nicht grösser als eine vorgegebene Zeitdauer sein.

c) Die Impulse am Ausgang des Amplitudendetektors müssen für eine vorgegebene Zeitdauer am Eingang der Auswerteschaltung anliegen.

Die Uberprüfung der Impulspausendauer und der Zeit, in der die Impulse am Eingang der Auswerteschaltung anliegen, erfolgt durch je einen Zähler, der von einem Taktgeber gesteuert wird.

Bei Tonfrequenz-Rundsteuerempfängern müssen Signale der Wechselstrom-Telegrafie, die über das Starkstromnetz gesendet werden, trotz fallweiser Störungen durch Netzoberwellen - deren Amplitude oft ein mehrfaches des Tonfrequenz-Signals beträgt - eindeutig erkannt werden.

Üblicherweise geschieht das durch auf die Signalfrequenz abgestimmte Tonfrequenz-Bandpass-Filter, die die Amplitude der Oberwellen möglichst reduzieren und die Signalfrequenz bevorzugt passieren lassen. Das so gefilterte Signal wird anschliessend einem Amplitudendetektor zugeführt und später hinsichtlich der zeitlichen Länge (Mindest- und Maximallänge eines unterbrechungsfreien Pulses) überprüft.

Da einerseits mit Verringerung der Bandbreite des vorgeschalteten Filters die Einschwingzeit zunimmt, aber andererseits ein vorgegebenes Impulsraster noch übertragen werden muss, sind der Einengung des Durchlassbereiches Grenzen gesetzt, die - bei vorgegebener Filtergrundstruktur - auch die Dämpfung der Netzharmonischen begrenzen.

Als Folge davon treten bei kleinen Signalamplituden und Signalfrequenzen in der Nähe amplitudenstarker Netzoberwellen, durch das gleichzeitige Vorhandensein beider Frequenzen am Filterausgang, Schwebungsbilder auf, die dem bekannten Verlauf

$$\sin \frac{\omega_1 + \omega_2}{2} \cdot t) \cdot \cos (\frac{\omega_1 - \omega_2}{2} \cdot t)$$

entsprechen, also näherungsweise bestehend aus einer periodischen Schwingung mit der mittleren Frequenz $\frac{\omega_1 + \omega_2}{2}$) und moduliert mit der Differenzfrequenz bei einer maximalen Amplitude, die der Summe der beiden Spektralanteile, sowie einer minimalen Amplitude, die der Differenz der Einzelamplituden entspricht.

Diesem Vorgang überlagert sich noch im Impulsbetrieb der Einschwingvorgang des Filters.

Der Erfindung liegt die Aufgabe zugrunde, ein empfangenes Tonfrequenzsignal - unabhängig von eventuell vorhandenen Netzoberwellen - stets bei gleichen Tonfrequenz-Amplitudenwerten zu erkennen, von einer zufälligen Dauerstörung gleicher Art zu unterscheiden und der weiteren Auswertung zuzuführen. Besonders von Bedeutung ist dabei auch die Einhaltung einer definierten Ansprechspannung, um eventuell vorhandene, störende Rundsteuertelegramme mit kleiner Amplitude aus anderen Teilen des Gesamtnetzes (Überkopplungen) sicher zu unte drücken.

Nach der Erfindung wird ein durch Schwellwertüberschreitungen charakterisierter Einzelimpuls durch die Auswerteschaltung dann registriert, wenn folgende bedingungen erfüllt sind:

a) der Wert der Zeitsumme der Schwellwertüberschreitungen innerhalb eines Zeitfensters liegt zwischen einem vorgegebenen Mindestwert und einem vorgegebenen Maximalwert und

b) die von einer ersten Schwellwertüberschreitung innerhalb des Zeitfensters bis zum Erreichen des Mindestwertes durch den Wert der Zeitsumme auftretenden Pausen zwischen zwei Schwellwertüberschreitungen sind jeweils kürzer als eine vorgegebene Zeitdauer.

Das in der erfindungsgemässen Einrichtung angewandte Verfahren unterstützt somit das Filter, indem es das Filterausgangssignal dahingehend untersucht, ob - falls eine Schwebung vorliegt - das Schwebungsbild bzw. das digitalisierte Empfangssignal mit dem erwarteten Schwebungssignal übereinstimmt.

Die Übereinstimmung wird durch drei Kriterien geprüft:

a) Die Zeitsumme, in welcher der Schwellwert überschritten wird, muss im Erwartungszeitraum des Signals oder im Zeitfenster jedes Impulses einen Mindestwert erreichen (« Mindest-Impulslänge »).

b) Die Zeitsumme darf im Erwartungszeitraum einen Maximalwert nicht überschreiten (« Maximale-Impulslänge » ).

c) Vom Beginn des ersten Pulses bis zum Erreichen der « Mindest-Impulslänge » darf keine Pulspause (Schwebungslücke) grösser als eine vorgegebene Zeit (« Maximale Lücke ») sein.

Als Auswerteschaltung für die Ermittlung der Zeitsumme der Schwellwertüberschreitung und der Zeitdauer jeder Pause zwischen zwei Schwellenwert überschreitungen können kapazitive Speicher mit nachgeschalteten Analog-Komparatoren vorgesehen sein, deren Ausgangsspannungen kontinuierlich oder am Ende jedes Zeitfensters abgefragt werden. Dabei kann die Anspeisung der kapazitiven Speicher über vom Impulstelegramm gesteuerte Stromquellen erfolgen. Damit kann die erfindungsgemässe Einrichtung mit einfachen Analogschaltungen aufgebaut werden.

In einer alternativen Ausführungsform kann als Auswerteschaltung für die Zeitsumme der Schwellwertüberschreitungen ein digitaler Zähler vorgesehen sein, der während jeder Schwellwertüberschreitung innerhalb des Zeitfensters die Impulse eines Taktgenerators zählt und dessen Stand durch je einen Komparator mit Zahlenwerten für die Mindestimpulslänge und die Maximalimpulslänge verglichen wird. Ebenso kann als Auswerteschaltung für die Dauer jeder Pause ein mit der ersten Schwellwertüberschreitung in einem Zeitfenster aktivierter Zähler vorgesehen sein, der während jeder Pause die Impulse eines Taktgenerators zählt und der mit jeder neuen Schwellwertüberschreitung sowie nach Ablauf der Mindestimpulslänge zurückgesetzt wird, wobei der Stand des Zählers durch einen Komparator mit einem Zahlenwert für die maximale Pausenlänge verglichen wird. Damit können die Auswerteschaltungen auf digitalem Wege mit einer Zähleranordnung realisiert werden. Auf analoge Weise ist jedoch auch die Realisierung mit einem Mikroprozessor oder Mikrocomputer möglich.

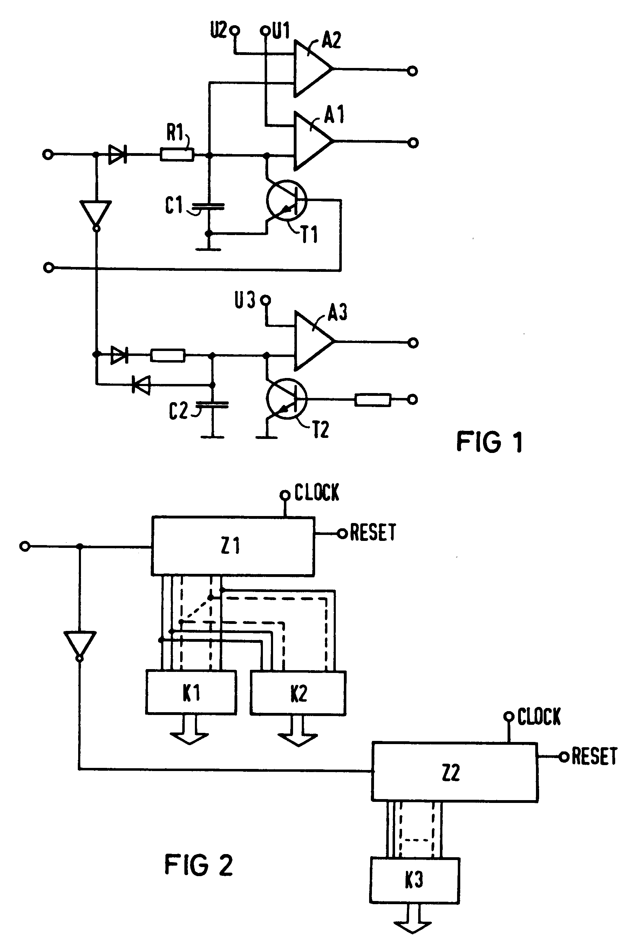

Fig. 1 zeigt die Anwendung des Erfindungsgedankens in analoger Schaltungstechnik.

Das Impulstelegramm wird über eine Diode $D_3$ und einen Widerstand $R_1$ einem Kondensator $C_1$ zugeführt, so dass der Kondensator $C_1$ bei vorhandenem und demoduliertem Trägerfrequenzsignal aufgeladen wird. Anstelle des Widerstands $R_1$ kann auch eine gesteuerte Stromquelle eingesetzt werden. Der Kondensator $C_1$ ist mit jeweils einem Eingang zweier Analogkomparatoren $A_1$ und $A_2$ verbunden. Am zweiten Eingang des ersten Analogkomparators $A_1$ steht eine wählbare Spannung $U_1$ an, mit der eine Mindestimpulslänge vorgegeben wird. Am zweiten Eingang des Komparators $A_2$ steht eine ebenfalls wählbare Spannung $U_2$ an, mit der eine Maximalimpulslänge vorgegeben wird. Die Ausgänge der beiden Analog-Komparatoren $A_1$ und $A_2$ werden kontinuierlich oder zumindest zu Ende des Erwartungszeitraums für den Signalimpuls abgefragt und geben an, ob einerseits (bei beliebiger Stückelung in Einzelimpulse) die vorgegebene Mindestimpulslänge erreicht und andererseits die vorgegebene Maximallänge nicht überschritten wurde.

Über einen Inverter 1, eine Diode $D_1$ und einen Widerstand $R_2$ wird das Impulstelegramm ausserdem einem zweiten Kondensator C2 zugeführt. Die Reihenschaltung von Diode $D_1$ und Widerstand $R_2$ ist mit einer Diode $D_2$ überbrückt, deren Leitrichtung der Leitrichtung der Diode $D_1$ entgegengesetzt gerichtet ist. Damit wird der Kondensator $C_2$ innerhalb jeder Impulspause langsam aufgeladen und bei vorhandenem Tonfrequenzsignal sofort entladen. Der Kondensator C2 ist mit einem Eingang eines Komparators A3 verbunden, an dessen zweiten Eingang eine wählbare Spannung $U_3$ ansteht. Mit dieser Spannung $U_3$ wird die maximal zulässige Impulspause festgelegt. Wenn die Spannung am Kondensator C2 die Spannung $U_3$ überschreitet, also wenn die Impulspause grösser als die maximal zulässige Impulspause wird, so spricht der Komparator A3 an und jede weitere Impulsauswertung wird abgebrochen. Ist die Mindestimpulslänge erreicht, so ist jederzeit mit dem Ende des Tonfrequenz-Signals zu rechnen und keine weitere Beobachtung der signallosen Zeit möglich. Daher wird bei erfüllter Mindestlänge, ebenso wie ausserhalb der Erwartungszeiträume (die jeweils mit den ersten Tonfrequenz-Signal beginnen), die Aufladung von C2 unterdrückt. Das Rücksetzen der Kondensatoren C1, C2 erfolgt durch Entladetransistoren T1, T2, die den Kondensatoren C1, C2 parallel geschaltet sind.

Bei einem Ausführungsbeispiel nach Fig. 2 wird die Erfindung in digitaler Technik verwirklicht. Hierbei werden Taktimpulse (clock) bei vorhandenem, demoduliertem Tonfrequenz-Signal in einen Zähler Z1 eingezählt. Die Ausgänge des Zählers Z1 sind mit zwei digitalen Komparator K1 und K2 verbunden. Diese Komparatoren K1 und K2 vergleichen den Zählerstand Z1 mit vorgegebenen Zählerständen für die Mindestlänge und die Maximallänge eines Impulses.

Der Zähler Z1 wird am Ende des Erwartungszeitraumes oder bei Überschreitung der Maximallänge über den Reset-Eingang zurückgesetzt. Ab dem jeweils ersten auftretenden Eingangsimpuls bis zu dem Erreichen der Mindestimpulslänge werden die Taktimpulse (clock) beinicht vorhandenem Eingangssignal in einem zweiten Zähler Z2 eingezählt und in einem digitalen Komparator K3 mit dem digital vorgegebenen Wert für die maximale Impulspause verglichen. Dieser zweite Zähler Z2 wird beineuerlich eintreffendem Tonfrequemz-Signal sofort zurückgesetzt.

In vergleichbarer Weise kann die Lösung der Zähleraufgaben durch einen entsprechend programmierten Prozessor erfolgen. Das demodulierte Tonfrequenz-Signal wird an einen Eingang gelegt und der Prozessor startet und beendet die Zählvorgänge.

## Patentansprüche

1. Einrichtung für Tonfrequenz-Rundsteuerempfänger, zur Bewertung von Empfangssignalen, die aus Impulstelegrammen bestehen, deren als Tonfrequenzsignal übertragene Einzelimpulse jeweils innerhalb eines von einem Zeitraster vorgegebenen Zeitfensters liegen, mit einem auf die Tonfrequenz abgestimmten EingangsBandpaß-Filter, einem nachgeschalteten Amplitudendetektor zur Feststellung von Schwellwertüberschreitungen durch die Amplitude des Ausgangssignales des Eingangs-Bandpaß-Filters und mit einer an den Ausgang des Amplitudendetektors angeschlossenen Auswerteschaltung zur Registrierung eines, durch Schwellwertüberschreitungen charakterisierten, Einzelimpulses wenn folgende Bedingungen erfüllt sind:
   a) der Wert der Zeitsumme der Schwellwertüberschreitungen innerhalb eines Zeitfensters liegt zwischen einem vorgegebenen Mindestwert und einem vorgegebenen Maximalwert und
   b) die von einer ersten Schwellwertüberschreitung innerhalb des Zeitfensters bis zum Erreichen des Mindestwertes durch den Wert der Zeitsumme auftretenden Pausen zwischen zwei Schwellwertüberschreitungen sind jeweils kürzer als eine vorgegebene Zeitdauer.

2. Einrichtung nach Anspruch 1, dadurch gekennzeichnet, dass als Auswerteschaltung für die Ermittlung der Zeitsumme der Schwellwertüberschreitungen und der Zeitdauer jeder Pause zwischen zwei Schwellwertüberschreitungen kapazitive Speicher (C1, C2) mit nachgeschalteten Analog-Komparatoren (A1, A2, A3) vorgesehen sind, deren Ausgangsspannungen kontinuierlich oder am Ende jedes Zeitfensters abgefragt werden.

3. Einrichtung nach Anspruch 1 oder 2, dadurch gekennzeichnet, dass die Anspeisung der kapazitiven Speicher (C1, C2) über vom Impulstelegramm gesteuerte Stromquellen erfolgt.

4. Einrichtung nach Anspruch 1, dadurch gekennzeichnet, dass als Auswerteschaltung für die Zeitsumme der Schwellwertüberschreitungen ein digitaler Zähler (Z1) vorgesehen ist, der während jeder Schwellwertüberschreitung innerhalb des Zeitfensters die Impulse eines Taktgenerators zählt und dessen Stand durch je einen Komparator (K1, K2) mit Zahlenwerten für die Mindestimpulslänge und die Maximalimpulslänge verglichen wird.

5. Einrichtung nach Anspruch 1 oder 4, dadurch gekennzeichnet, dass als Auswerteschaltung für die Dauer jeder Pause ein mit der ersten Schwellwertüberschreitung in einem Zeitfenster aktivierter Zähler (Z2) vorgesehen ist, der während jeder Pause die Impulse eines Taktgenerators zählt und der mit jeder neuen Schwellwertüberschreitung sowie nach Ablauf der Mindestimpulslänge zurückgesetzt wird und dass der Stand des Zählers (Z2) durch einen Komparators (K3) mit einem Zahlenwert für die maximale Pausenlänge verglichen wird.

## Claims

1. Device for audio-frequency ripple-control receivers, for evaluating received signals which consist of pulse messages, the single pulses of which, transmitted as an audio-frequency signal, are in each case located within a time window predetermined by a timing pattern, comprising an input band-pass filter tuned to the audio frequency, followed by an amplitude detector for determining the threshold transgressions by the amplitude of the output signal of the input band-pass filter and comprising an evaluating circuit, connected to the output of the amplitude detector, for registering a single pulse, characterised by threshold transgressions, when the following conditions are met:
   a) the value of the temporal sum of the threshold transgressions within a time window is between a predetermined minimum value and a predetermined maximum value, and
   b) the pauses between two threshold transgressions, which occur from a first threshold transgression within the time window until the minimum value is reached by the value of the temporal sum, are in each case shorter than a predetermined period of time.

2. Device according to Claim 1, characterised in that capacitive stores (C1, C2) followed by analog comparators (A1, A2, A3), the output voltages of which are interrogated continuously or at the end of each time window, are provided as evaluating circuit for determining the temporal sum of the threshold transgressions and the period of time of each pause between two threshold transgressions.

3. Device according to Claim 1 or 2, characterised in that the capacitive stores (C1, C2) are fed via current sources controlled by the pulse message.

4. Device according to Claim 1, characterised in that a digital counter (Z1), which counts the pulses of a clock generator during each threshold transgression within the time window and the count of which is compared by one comparator each (K1, K2) with numerical values for the minimum pulse length and the maximum pulse length, is provided as evaluating circuit for the temporal sum of the threshold transgressions.

5. Device according to Claim 1 or 4, characterised in that a counter (Z2), which is activated with the first threshold transgression in a time window and which counts the pulses of a clock generator during each pause and which is reset with each new threshold transgression and after the minimum pulse length has elapsed, is provided as evaluating circuit for the duration of each pause, and in that the count of the counter (Z2) is compared with a numerical value for the maximum pause length by a comparator (K3).

## Revendications

1. Dispositif pour des récepteurs de télécommande centralisée à fréquence vocale, pour évaluer des signaux de réception qui sont constitués par des télégrammes d'impulsions, dont les impulsions individuelles, transmises en tant que signal à fréquence vocale, sont situés respectivement à l'intérieur d'une fenêtre temporelle prédéterminée par une trame temporelle, avec un filtre passe-bande d'entrée, accordé sur la fréquence vocale, avec un détecteur d'amplitude branché en aval et servant à déterminer des dépassements d'une valeur de seuil par l'amplitude du signal de sortie du filtre passe-bande d'entrée, et avec un circuit d'évaluation raccordé à la sortie du détecteur d'amplitude et servant à enregistrer une impulsion individuelle caractérisée de dépassements de la valeur de seuil lorsque les conditions suivantes sont satisfaites :

a) la valeur de la somme des durées des dépassements de la valeur de seuil à l'intérieur d'une fenêtre temporelle se situe entre une valeur minimale prédéterminée et une valeur maximale prédéterminée, et
b) les pauses qui apparaissent, sous l'effet d'un premier dépassement de la valeur de seuil dans la fenêtre temporelle jusqu'à ce que la valeur de la somme des durées atteigne la valeur minimale, entre deux dépassements de la valeur de seuil sont inférieures respectivement à une durée prédéterminée.

2. Dispositif suivant la revendication 1, caractérisé par le fait qu'il est prévu, comme circuit d'évaluation servant à déterminer la somme des durées des dépassements de la valeur de seuil et la durée de chaque pause entre deux dépassements de la valeur de seuil, des mémoires capacitives (C1,C2) en aval desquelles sont branchés des comparateurs analogiques (A1,A2,A3), dont les tensions de sortie sont interrogées en continu ou à la fin de chaque fenêtre temporelle.

3. Dispositif suivant la revendication 1 ou 2, caractérisé par le fait que l'alimentation des mémoires capacitives (C1,C2) est réalisée par l'intermédiaire de sources de courant commandées par le télégramme d'impulsions.

4. Dispositif suivant la revendication 1, caractérisé par le fait qu'il est prévu, comme circuit d'évaluation pour la somme des durées des dépassements des valeurs de seuil, un compteur numérique (Z1), qui compte, pendant chaque dépassement de la valeur de seuil, à l'intérieur de la fenêtre temporelle, les impulsions d'un générateur de cadence et dont l'état est comparé, par des comparateurs respectifs (K1,K2), à des valeurs chiffrées indiquant la durée minimale d'impulsion et la durée maximale d'impulsion.

5. Dispositif suivant la revendication 1 ou 4, caractérisé par le fait qu'il est prévu, comme circuit dévaluation de la durée de chaque pause, un compteur (Z2) activé par le premier dépassement de la valeur de seuil pendant une fenêtre temporelle et qui, pendant chaque pause, compte les impulsions d'un générateur de cadence et est ramené à zéro lors de chaque nouveau dépassement de la valeur de seuil ainsi qu'après l'écoulement de la durée minimale d'impulsion, et que l'état du compteur (Z2) est comparé par un comparateur (K3) à une valeur chiffrée représentant la durée maximale de la pause.

FIG 1

FIG 2